(19) Europäisches Patentamt / European Patent Office / Office européen des brevets

(11) **EP 3 511 196 A1**

(12) **EUROPEAN PATENT APPLICATION**
published in accordance with Art. 153(4) EPC

(43) Date of publication:
**17.07.2019 Bulletin 2019/29**

(51) Int Cl.:
**B60L 15/40** *(2006.01)*   **B61L 25/04** *(2006.01)*

(21) Application number: **17848409.3**

(86) International application number:
**PCT/JP2017/025630**

(22) Date of filing: **13.07.2017**

(87) International publication number:
**WO 2018/047464 (15.03.2018 Gazette 2018/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **08.09.2016 JP 2016175181**

(71) Applicant: **Hitachi, Ltd.**
**Tokyo 100-8280 (JP)**

(72) Inventors:
• **YOKOTA, Masataka**
  **Tokyo 100-8280 (JP)**
• **ODA, Atsushi**
  **Tokyo 100-8280 (JP)**
• **NISHINO, Takayoshi**
  **Tokyo 100-8280 (JP)**
• **KATSUTA, Keiichi**
  **Tokyo 100-8280 (JP)**

(74) Representative: **Mewburn Ellis LLP**
**City Tower**
**40 Basinghall Street**
**London EC2V 5DE (GB)**

(54) **TRAIN DRIVING ASSIST DEVICE**

(57)   A driving assist device determines a driving reference pattern of a train and presents assist information about the driving operation of the train to the driver of the train. The driving assist device is characterized by: being provided with a simulation pattern generation unit for generating a simulation pattern by simulation; calculating a degree of similarity on the basis of said simulation pattern and an actual pattern to determine a first section having a high degree of similarity and a second section having a low degree of similarity; and generating, as said driving reference pattern, a running pattern that is combined with said simulation pattern in said first section and with said actual pattern in said second section.

[FIG. 2]

**Description**

Technical Field

The present invention relates to a train driving assist device for assisting driving of a train by providing a driver with information on guiding a driving operation of the train.

Background Art

In a railway system, a driver of a train performs a driving operation while appropriately making a determination on complying with a speed limit and accurately keeping an arrival time and an arrival position based upon a train schedule. When operating such a railway system, a running assist device that assists the driving operation of the driver and accomplishes energy saving and improvement of riding comfort by providing pieces of information such as a switching point of the driving operation, and the like has been proposed and put into practical use. A driving assist device calculates a target running pattern, and provides the driver with information on the driving operation in accordance with the target running pattern. Here, the running pattern is a relationship between a position and a speed of the train in a running section.
As a background art in this technical field, there is JP-A-2015-137035 (PTL 1). This publication is characterized in that comprehension level data is analyzed for all of the driver, and when the number of the comprehension level data exceeding a predetermined threshold value with respect to the total number of the analyzed comprehension level data is determined to be in a state where the operation contents maintain the status quo, the input parameter is corrected so that the contents of train performance curve data prepared by the train performance curve preparation device approaches the contents of operation history data (refer to Claim 5 of PTL 1) .

Citation List

Patent Literature

PTL 1: JP-A-2015-137035

Summary of Invention

Technical Problem

In a railway system in which a driver drives a train, the driver makes a determination on complying with a speed limit and accurately keeping an arrival time and an arrival position. Therefore, it is desirable that driving assist information provided by a driving assist device is information having a small cognitive load in a scene where the driver makes the determination on compliance with the speed limit and accuracy of the arrival time and the arrival position.
In the invention disclosed in PTL 1, an input parameter used when a train performance curve preparation device prepares train performance curve data is corrected so that the train performance curve data prepared by numerical calculation in the train performance curve preparation device approaches contents of operation history data. For example, it is possible to adjust a weighting parameter as to whether an objective function at the time of preparing the train performance curve puts an emphasis on energy saving or a margin time of running. According to the adjustment, information provided from the driving assist device can be adjusted to information that the driver desires, whereby even though the emphasis of the driver during the driving on the energy saving or on the margin time of the running has been changed over time, it becomes possible to match a running time assumed by the driver with a running time on the premise of assist information. As a result, it is possible to provide driving assist information having a small cognitive load.
On the other hand, a driving operation at the time when the driver decelerates in a speed limit section and a section immediately before a stop station is an operation relating to the compliance with the speed limit and the accuracy of the arrival time and the arrival position, and there exists various know-how that takes into consideration of characteristics such as gradient and a curve in each section for every section. The driver performs the driving operation reflecting this know-how, but, since such know-how is different depending on the characteristics of the section and there is a possibility that such know-how is different depending on each driver, thereby being complicated and difficult to be modeled. Therefore, in a method of the related art for determining the driving assist information based only upon the train performance curve obtained by the numerical calculation, the driving assist information and determination of the driver may be deviated from each other in the speed limit section and the section immediately before the stop station, thereby becoming difficult to provide the driving assist information having the small cognitive load on the driver.
An object of the present invention is to enable driving assistance in consideration of a driving operation of a driver, thereby making it possible to provide driving assist information having a small cognitive load on a driver even in a section where complicated driving is required.

Solution to Problem

In order to solve the above-mentioned drawbacks, for example, a configuration described in the scope of the patent claims is adopted.

Even though the present invention includes a plurality of means for solving the above-mentioned drawbacks, one example thereof is described as follows and is characterized by being provided with: a simulation pattern generation unit which generates a simulation pattern by numerical calculation based upon a simulation condition; a degree-of-similarity calculation unit which calculates a degree of similarity between the simulation pattern and an actual pattern information based upon the simulation pattern and the actual pattern information, determines a first section having a high degree of similarity and a second section having a low degree of similarity, and outputs the first section and the second section as degree-of-similarity information; a section simulation pattern generation unit which generates a section simulation pattern in the first section based upon the actual pattern information and the degree-of-similarity information; and a combination pattern generation unit which generates a driving a reference pattern from the actual pattern information, the section information, and the section simulation pattern, wherein the combination pattern generation unit generates a pattern in which the section simulation pattern is combined in the first section and the actual pattern is combined in the second section as a driving reference pattern.

Advantageous Effects of Invention

According to the present invention, a running pattern used as a reference when a driving assist device outputs assist information adopts an actual pattern actually operated by a driver in a section where complicated driving is required, and becomes a pattern in which other parts are optimized. Accordingly, it is possible to assist driving capable of saving energy throughout whole stations, while the driving is based upon driving operation reflecting know-how of the driver in a section where deviation becomes large.

Brief Description of Drawings

Fig. 1 is a diagram illustrating a configuration example of a rolling stock system according to a first embodiment.
Fig. 2 is a diagram illustrating a configuration example of a driving assist device 100.
Fig. 3 is a diagram illustrating an example of a running pattern and running pattern information.
Fig. 4 is a diagram illustrating an example of an actual pattern.
Fig. 5 is a flow chart illustrating an example of processing in a degree-of-similarity calculation unit 120.
Fig. 6 is a diagram illustrating an example of coincidence determination in the degree-of-similarity calculation unit 120.
Fig. 7 is a flow chart illustrating an example of processing in a section simulation pattern generation unit 130.
Fig. 8 is a diagram illustrating an example of a driving reference pattern generated by the driving assist device 100.
Fig. 9 is a diagram illustrating a configuration example of a rolling stock system according to a second embodiment.
Fig. 10 is a diagram illustrating a configuration example of a driving assist device 200.
Fig. 11 is a diagram illustrating a configuration example of a rolling stock system according to a third embodiment.
Fig. 12 is a diagram illustrating a configuration example of a driving assist device 300.

Description of Embodiments

Hereinafter, embodiments will be described with reference to the drawings.

[First Embodiment]

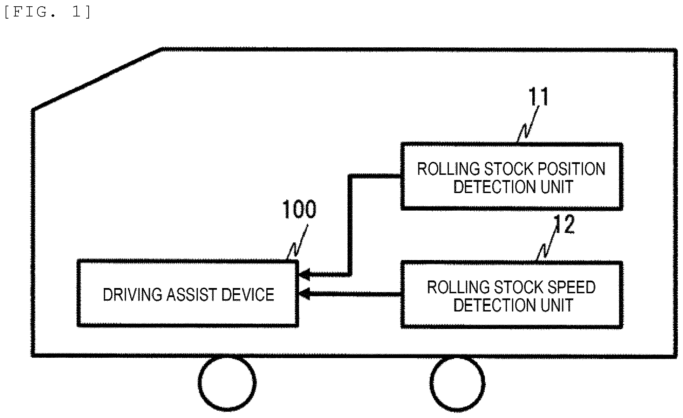

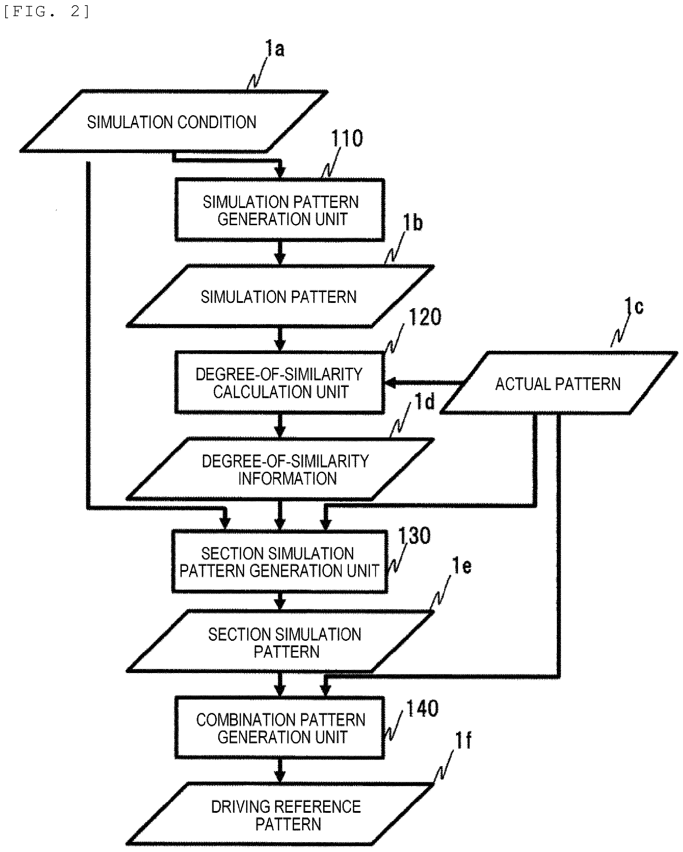

Fig. 1 is a configuration diagram of a rolling stock system according to a first embodiment of the embodiments. The rolling stock system includes a rolling stock position detection unit 11 which detects a position of a rolling stock, a rolling stock speed detection unit 12, and a driving assist device 100. The rolling stock position detection unit 11 detects position information of the rolling stock and transmits the detected position information to the driving assist device 100. The rolling stock speed detection unit 12 detects speed information of the rolling stock and transmits the detected speed information to the driving assist device 100. The driving assist device 100 generates running pattern information from a current position to a destination point and outputs the generated running pattern information as driving reference pattern information. Fig. 2 is a configuration diagram of the driving assist device 100 of an embodiment in the embodiments.

The driving assist device is formed of a simulation pattern generation unit 110, a degree-of-similarity calculation unit 120, a section simulation pattern generation unit 130, and a combination pattern generation unit 140, and generates the running pattern information from the current position to the destination point.

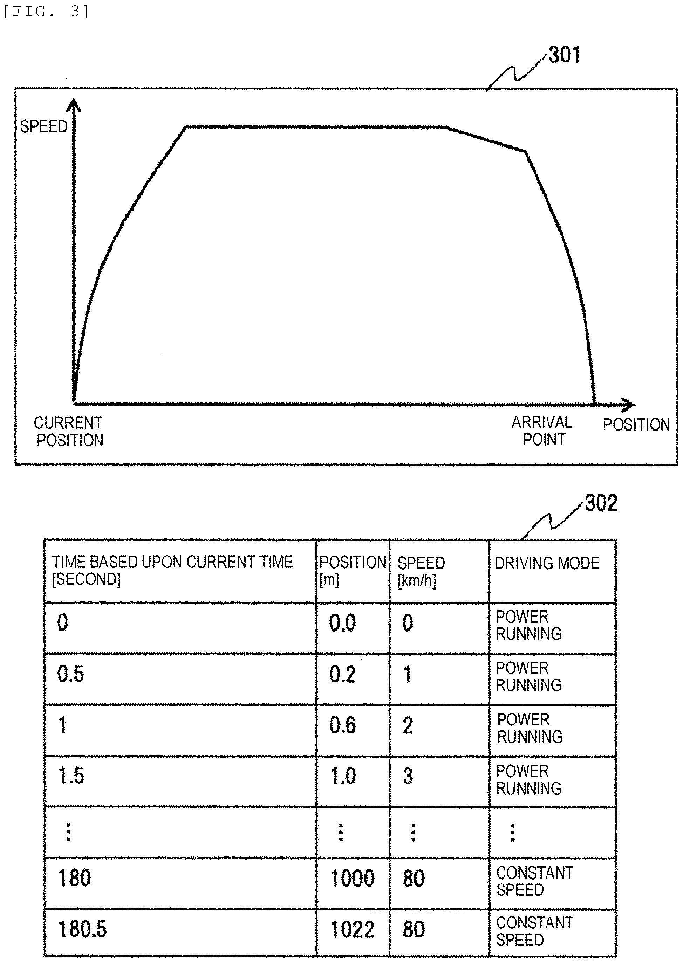

The running pattern is a change in a speed until a train arrives at a destination point from a present position, and can be represented by a graph showing a position in a horizontal axis and a speed for each position in a vertical axis as shown in 301 of Fig. 3. Further, 302 of Fig. 3 shows an example in which the running pattern information is described as a table. The running pattern information is a list of information required for uniquely determining the running pattern. Each row includes information on a time, a position, a speed, and a driving mode based upon the current time. In the example shown in 302 of Fig. 3, the running pattern information is recorded at a regular interval of 0.5 [second], but the running pattern information may not be recorded at 0.5 [second] intervals as long as the running pattern information is recorded with sufficient temporal accuracy to uniquely specify the running pattern, or a recording time may not be at an equal interval.

The simulation pattern generation unit 110 generates the running pattern information by, for example, combinatorial optimization calculation based upon a simulation condition 1a, and outputs the running pattern information as a simulation pattern 1b. Here, the simulation condition 1a is information required for calculating the running of the train from the current train position to the arrival point, and is formed of rolling stock characteristics and route conditions. The rolling stock characteristics are information required for reproducing physical behaviors of the train, and, for example, are information such as a total weight of the train, a length of the train, a tractive force of the train, a braking force of the train, efficiency at the time of power running of the train and efficiency at the time of braking. The route conditions are information on a route and a train schedule required for generating a running pattern, and, for example, are information such as positional information on a departure station, positional information on an arrival point, gradient information between the departure station and the arrival point, curve information between the departure station and the arrival point, and speed limit information between the departure station and the arrival point, and information on a predetermined running time to be satisfied between the departure station and the arrival point. Further, the combinatorial optimization calculation is calculation processing for deriving the running pattern information that minimizes an objective function including at least one of electric power consumption, riding comfort, and operability at the time of the running of the train while satisfying constraint conditions such as a speed limit for each position and a specified running time Tt to the arrival point. Here, the objective function is represented by at least more than one combination of a function FE relating to the electric power consumption, a function FR relating to the riding comfort, and a function FC relating to the operability. A function is a function that acquires a small value when each corresponding item is in a more desirable state. For example, the FE can be the electric power consumption, the FR can be the sum of absolute values of jerk represented as twice differential of a speed, FC can be the sum of the number of driving operations, and the objective function can be defined as FE + FR + FC. At this time, a small value of each objective function indicates a desirable state for a railway business operator or a passenger. Further, since the objective function is to change according to the running pattern information, the minimization of the objective function is to search for the running pattern information in which combinations that can be realized under the constraint conditions such as train performance, route conditions, and a specified running time Tt becomes minimized. Additionally, the FR and the FC are not limited to the above-mentioned function type, and, for example, the FR may be the maximum value of the absolute value of the jerk, or may be the number of acceleration/deceleration during the running, and the FC may be frequency of the driving operation per unit time or may be the number of times that switching of the driving operation is required within a predetermined time (for example, 10 seconds) . In short, any function that becomes a small value when the state is desirable for the business operator of the train or the passenger may be used. Further, the objective function may not be the sum of the FE, the FR, and the FC, and may be a function including at least one of the FE, the FR, and the FC and monotonously increasing with respect to included elements. Additionally, in the case of the combinatorial optimization operation, if it is assumed that a value of the objective function is defined as a function acquiring a large value when the corresponding item is in a more desirable state, even in a case where the maximum value of the objective function is obtained, the result is the same.

The degree-of-similarity calculation unit 120 calculates a degree of similarity between the simulation pattern 1b and an actual pattern 1c for each section from the current position to the arrival point, determines a first section having a high degree of the similarity and a second section having a low degree of the similarity, and outputs the first section and the second section to a section simulation pattern generation unit as degree-of-similarity information 1d.

Here, the actual pattern is information on a relationship between a position in a running section of a train actually operated by a driver and a speed of the train.

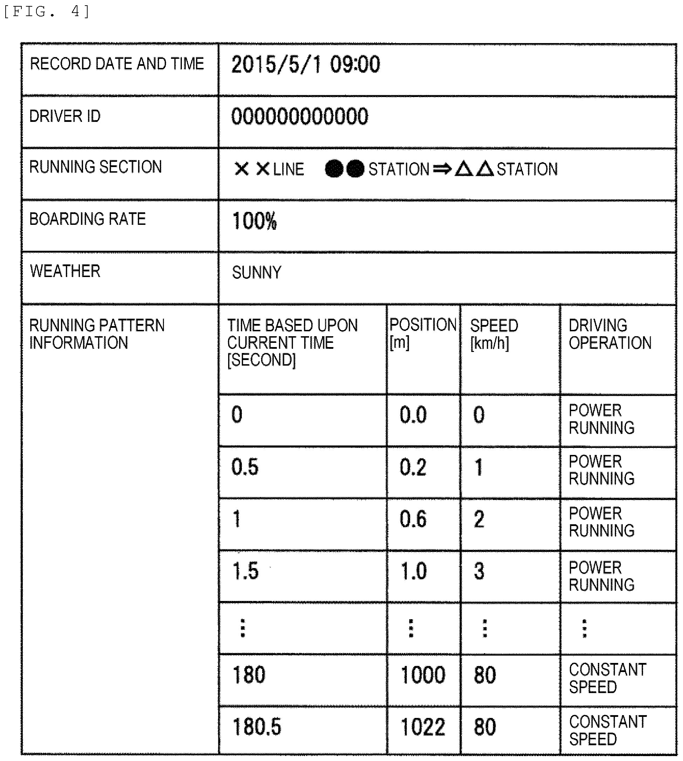

Fig. 4 illustrates an example of the actual pattern as a table. The actual pattern is formed of running pattern information and identification information. Here, the running pattern information is equivalent to information illustrated in 302 of Fig. 3, and the identification information is information for uniquely specifying a certain running result. Specifically, the identification information includes a date and time when the running results are recorded, a route at the time of recording, information between stations through which the train runs. Further, the identification information may include information relating to the operation of the train such as weather information of the date and time on which the running result is recorded, a boarding rate, and the like. Other information (a driver ID for specifying a driver, and the like) relating to the operation of the train may be included. Further, the identification information may include information such as an index representing the riding comfort, the electric power consumption corresponding to the objective function, and the like.

Determining a certain section as the first section in the degree-of-similarity calculation unit 120 means that a simulation pattern and the actual pattern are similar to each other in the section. Therefore, it is considered that a cognitive load is small when the simulation pattern is proposed to the driver, and the simulation pattern and a pattern obtained by adjusting the simulation pattern are represented to be usable for driving assist information. On the other hand, it means that the simulation pattern and the actual pattern are not similar to each other in a section determined as the second section. Therefore, in the second section, proposing the simulation pattern to the driver results in an increase in the cognitive load, so that it is desirable to propose the actual pattern while avoiding the proposal of the simulation pattern.

The section simulation pattern generation unit 130 generates a section simulation pattern 1e based upon the simulation condition 1a and the degree-of-similarity information 1d calculated by the degree-of-similarity calculation unit 120. The section simulation pattern 1e is calculated by combinatorial optimization with the constraint condition of being connected to the actual pattern 1c in the second section in the degree-of-similarity information 1d.

Here, when one or more actual patterns 1c exist, the section simulation pattern generation unit 130 calculates the section simulation pattern 1e corresponding to each of the actual patterns 1c. Further, at this time, if N discontinuous sections ($N \geq 2$) are determined as the second section in the degree-of-similarity information 1d, different actual pattern 1c may be combined in each section. When the actual pattern 1c exists in M or thereabout, the section simulation pattern 1e of $M^N$ types can be generated.

The combination pattern generation unit 140 selects a driving reference pattern 1f based upon the actual pattern 1c, the degree-of-similarity information 1d received from the degree-of-similarity calculation unit 120, and the section simulation pattern 1e received from the section simulation pattern generation unit. At this time, when a plurality of the actual patterns 1c or a plurality of the section simulation patterns 1e exist, a combination that complies with the specified target running time Tt and minimizes the objective function is selected out of combinations of the actual pattern generated by the actual pattern 1c or a combination thereof and the section simulation pattern 1e corresponding to the actual pattern, and is outputted as the driving reference pattern 1f.

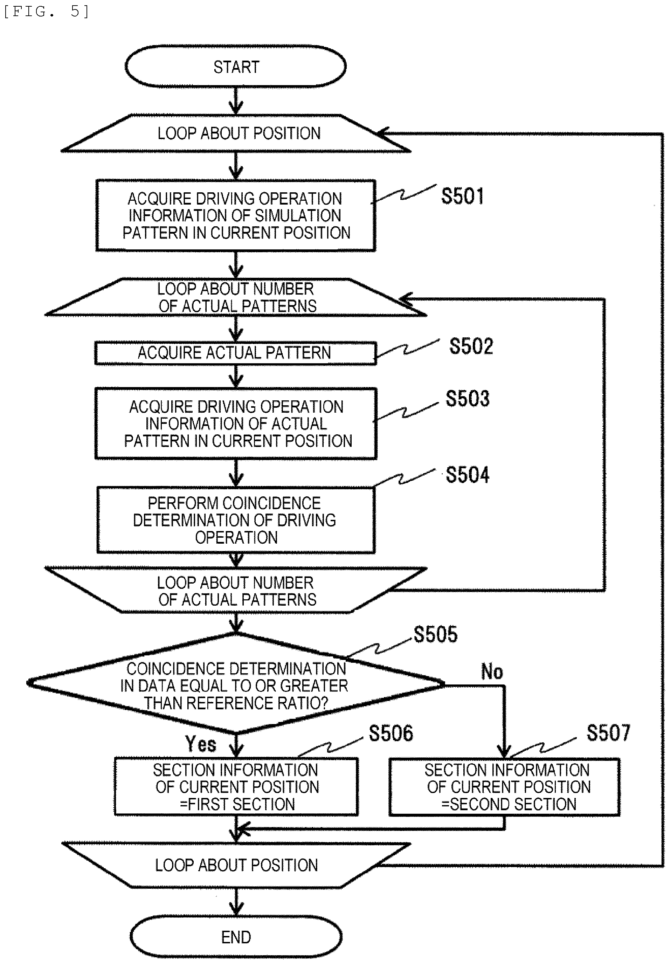

Fig. 5 illustrates the operation of the degree-of-similarity calculation unit 120. The degree-of-similarity calculation unit 120 executes coincidence determination for each actual pattern at each position from the current position to the arrival point, and calculates the degree of the similarity. Fig. 5 illustrates processing in the case of a plurality of the actual patterns, and even though one actual pattern exists, the degree of the similarity can be calculated in the same processing.

The following steps S501 to S506 are executed for each position X from the current position to the arrival point.

Step S501

A position X is updated, and driving operation information of a simulation pattern with the position X as a reference is acquired. The driving operation information includes a driving operation Cx1 at the position X, a next driving operation Ca1, and a previous driving operation Cb1.

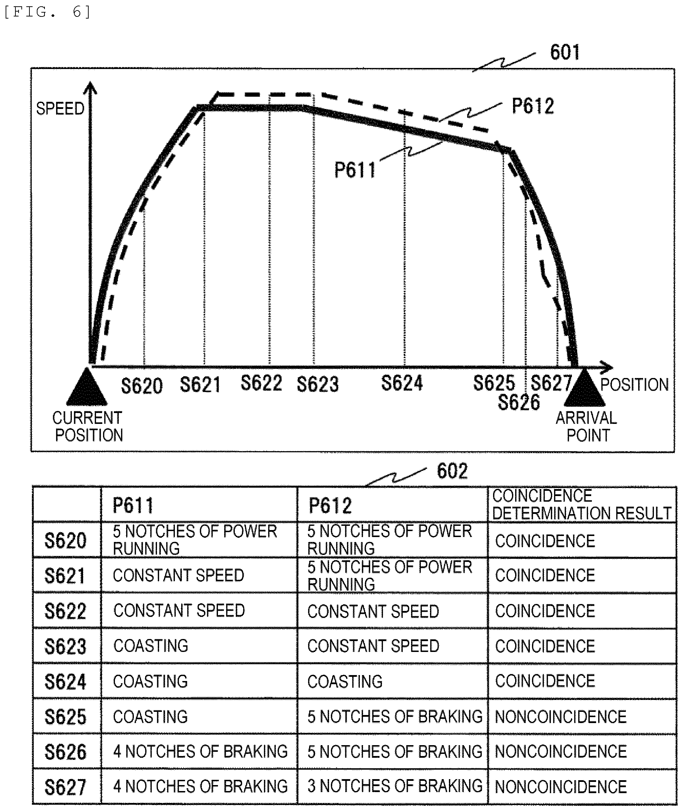

The driving operation is information indicating operation of the driver, and includes the number of notches of the power running (for example, 5 notches of the power running in an example of step S620 in Fig. 6), the number of notches of the braking (for example, 4 notches of the braking in an example of P611 of step S626 in Fig. 6), a constant speed, and coasting.

Here, a set of positions where the driving operation different from the Cx1 is performed is defined as Z, and the Ca1 and the Cb1 are defined as follows. An operation which is performed at a point closer to the current position than to the position X and closest to the position X in the Z is defined as the cb1. Further, an operation which is performed at a point closer to the arrival position than to the position X and closest to the position X in the Z is defined as the ca1. When there is no point corresponding to the Ca1 and the Cb1 together in the Z, respective ones are determined to be equal to Cx1. The process proceeds to step S502.

Step S502

The actual pattern is acquired.

Step S503

Driving operation information of a current actual pattern based upon the position X is acquired. The driving operation information includes a driving operation Cx2 at the position X. The process proceeds to step S504.

Step S504

A coincidence determination result at the position X of the current actual pattern is set as authenticity of the following equation.

"The Cx2 coincides with at least one of the Cx1, the Ca1, and the Cb1."

When the current actual pattern is a final actual pattern, the process proceeds to step S505. When the current actual pattern is not the final actual pattern, the process proceeds to the step S502.

Step S505

It is determined whether or not a ratio of the actual pattern of which the coincidence determination result at the position X is true is equal to or greater than a reference ratio . For example, the reference ratio can be set to 50%. When the determination result is true, the process proceeds to step S506, and when the determination result is false, the process proceeds to step S507.

Step S506

Section information at the position X is set to a first section. When the position X coincides with the arrival point, the process is terminated, and when the position X does not coincide with the arrival point, the process proceeds to the step S501.

Step S507

Section information at the position X is set to a second section. When the position X coincides with the arrival point, the process is terminated, and when the position X does not coincide with the arrival point, the process proceeds to the step S501.

An example of the coincidence determination at the step S504 is illustrated in Fig. 6. Reference numeral 601 is a diagram illustrating a simulation pattern P611 and an actual pattern P612 as a graph, and S620 to S627 indicate points from a departure point to an arrival point. Reference numeral 602 indicates driving operations and results of the coincidence determination of the P611 and the P612 in points S620 to S627. In the points S620 to S624, since the driving operation of the P612 coincides with the driving operation of each point of the P611 or the driving operation therebefore and thereafter, the coincidence determination result becomes "coincidence". On the other hand, since there is no coincidence in the points S625 to S627, the coincidence determination result becomes "noncoincidence".

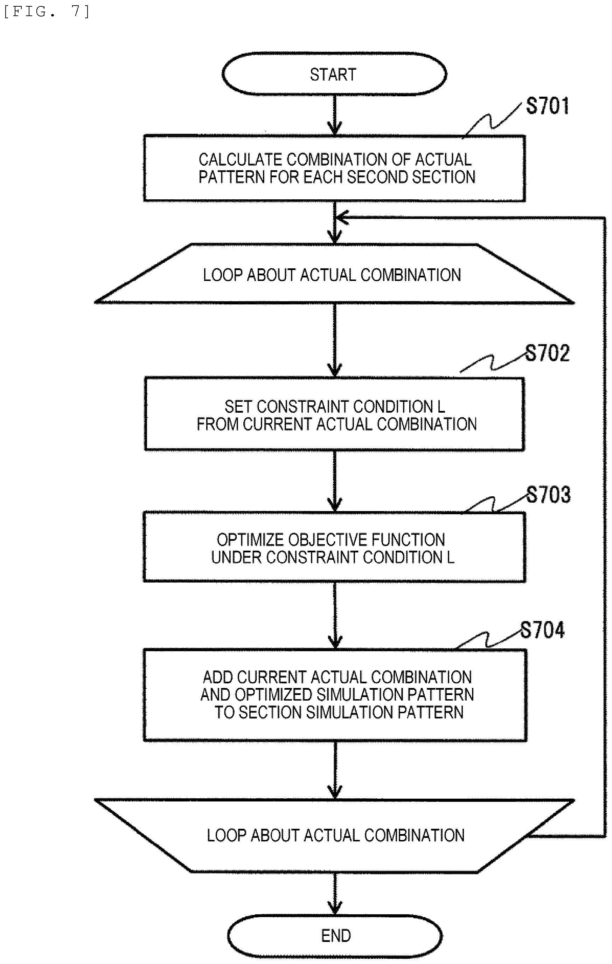

An operation of the section simulation pattern generation unit 130 is illustrated in Fig. 7. Further, here, there exist a plurality of discontinuous sections determined as the second section, and an operation in consideration of the combination thereof will be described.

Step S701

The number N of the discontinuous sections determined as the second section is calculated, and an actual combination list of $M^N$, in which the actual patterns 1c of M types are combined for each section, is set. The process proceeds to step S702, and the steps S702 to S704 are repeated as many times as the number of the actual combinations.

Step S702

A current actual combination is acquired from the actual combination list. A constraint condition Li for the second section of an i-th ($(1 \leq i \leq N)$ existing in an N-th section from the current actual combination is set as a constraint condition relating to a position X and a speed V in $Si \leq X \leq Ei$ in the corresponding section via equation 1, and the process proceeds to step S703.

$$\text{Equation (1)} \qquad Li:Vi(X) = Wi(X) \quad (Si \leq X \leq Ei)$$

Here, Si represents a start position in the i-th second section, Ei represents an end position in the i-th second section, and Wi represents a speed system of the current actual combination in the i-th second section.

Step S703

Combinatorial optimization that minimizes the objective function while complying with the target running time Tt specified under the constraint condition Li based upon the simulation is executed. The process proceeds to step S704.

Step S704

The current actual combination and the optimization simulation pattern acquired at the step S703 are added to the section simulation pattern. When the current actual combination is $M^N$ th final combination, the process is terminated. When the rest exists in the actual combination list, the process proceeds to the step S702.

Further, when the combination of each second section is not considered, a combination list set at the step S701 is defined as actual patterns themselves of M types, and the steps S702 to S704 may be repeated M times. Further, when the actual pattern is of one type, M may be set to 1 and the process may be performed in the same manner.

Further, a constraint equation at the step S702 may be represented as the following equation 2.

$$\text{Equation (2)} \qquad Li{:}Vi(X) \leq Wi(X) \ (Si \leq X \leq Ei)$$

At this time, the running pattern in the second section does not necessarily coincide with the actual pattern, however, since the speed thereof becomes lower than that of the actual pattern, there is no risk of easily exceeding the speed or easily passing by a stop point, whereby it is considered that an influence on the cognitive load on the driver is small.

Alternatively, the constraint condition Li at the step S702 is not constrained with respect to the speed, and the driving operation for each position in the section of $Si \leq X \leq Ei$ may be set to be exactly the same as the driving operation of the actual pattern. The running pattern in the second section does not necessarily coincide with the actual pattern, however, since the operation for each position is the same, it is considered that the influence on the cognitive load on the driver is small. By setting constraints in this form, for example, when a constant speed operation is performed in the actual pattern in a section where coasting is performed in the simulation pattern, a speed of the constant speed operation can be finely adjusted, thereby making it possible to approach energy-saving operation.

Further, a method of specifying the constraint conditions may be changed for each section, and, for example, a section including a braking operation is constrained by a speed determined by equation 1 or equation 2, and others may be constrained by driving operation contents.

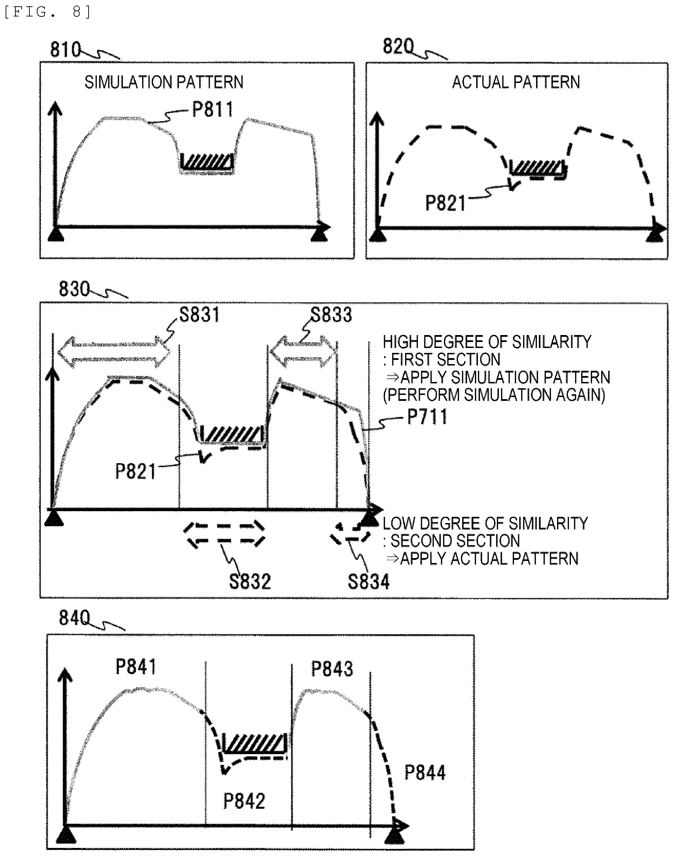

Fig. 8 illustrates an example of handling of a running pattern and a generated driving reference pattern in the driving assist device 100. The driving patterns relating to processing in the driving assist device 100 are four types, including: the actual pattern 1c provided as preliminary information; the simulation pattern 1b which the driving assist device 100 generates in process of performing; the section simulation pattern 1e; and the driving reference pattern 1f outputted from the driving assist device 100.

A solid line P811 in 810 represents the simulation pattern 1b, and a dotted line P821 in 820 represents the actual pattern 1c.

830 illustrates a comparison between two kinds of patterns in the degree-of-similarity calculation unit 120. As a result of comparison between a simulation pattern P811 and an actual pattern P821, sections S831 and S833 in 830 are determined as the first section having the high degree of similarity, and sections S832 and S834 are determined as the second section having the low degree of similarity. The actual pattern is applied in the S832 and the S834 determined as the second section in 830, and simulation is executed again in the sections S831 and S833 determined as the first section so as to be connected to the second section, thereby generating the section simulation pattern 1e.

840 illustrates the section simulation pattern 1e and the driving reference pattern 1f. The section simulation patterns which are results calculated by the section simulation pattern generation unit 130 are P841 and P843 indicated by an alternated long and short dash line in 840. Patterns obtained by cutting out the actual pattern P821 in the sections S832 and S834 are P842 and P844. The driving reference pattern 1f is a pattern formed by combining the P841 to the P844, which becomes a pattern outputted from the driving assist device 100.

According to the driving assist device 100 as described above in the first embodiment, the driving reference pattern 1f outputted by the driving assist device 100 becomes the pattern in which the running pattern generated by the simulation and the actual pattern that is a past result are combined with each other. Accordingly, the running pattern used as the reference when the driving assist device outputs assist information becomes the pattern obtained by optimizing other parts while adopting the running pattern actually operated by the driver for the section in which the complicated driving is required. Accordingly, it is possible to assist the driving which saves the energy throughout whole stations while reflecting the know-how of the driver with respect to the operation relating to compliance with the speed limit and the accuracy of the arrival time and the arrival position. Further, in comparison with the driving reference pattern 1f outputted by the driving assist device 100 and the pattern generated only using the actual pattern and the combination thereof, the section simulation pattern generation unit 130 performs the optimum simulation in the first section, whereby it is possible to generate a running pattern in which the objective function is further reduced than the running pattern based only upon the actual pattern.

[Second Embodiment]

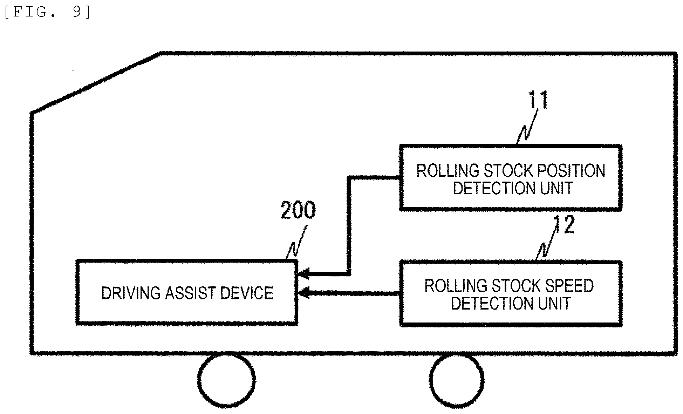

Fig. 9 is a configuration diagram of a rolling stock system which is a second embodiment of the embodiments. Since this embodiment has a configuration which is similar to that of the first embodiment described above, the same reference signs are affixed to components in common, and descriptions thereof will be omitted. The rolling stock system includes the rolling stock position detection unit 11 which detects the position of the rolling stock, the rolling stock speed detection unit 12, and a driving assist device 200.

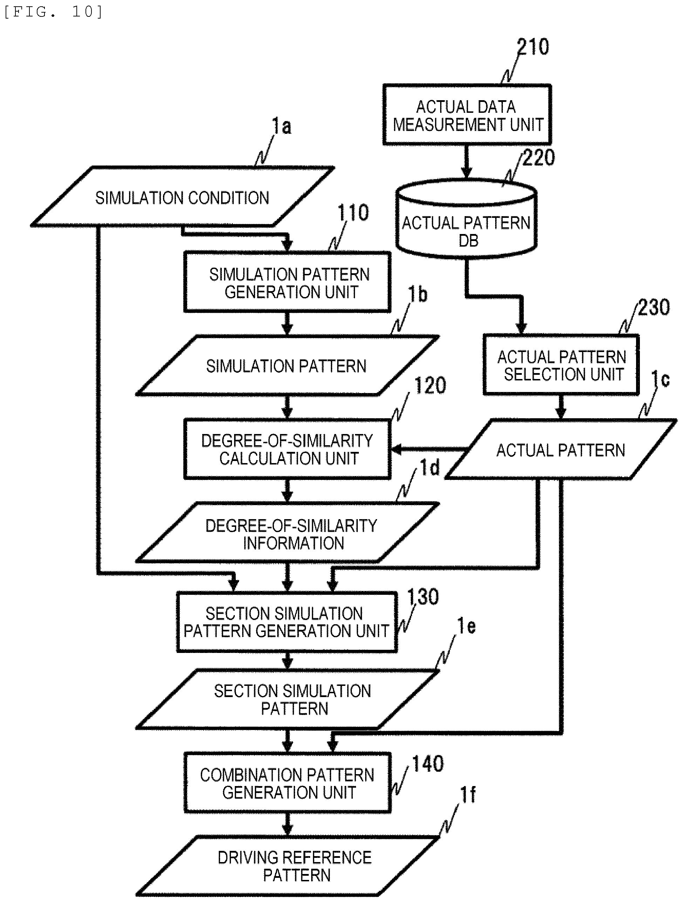

Fig. 10 is a configuration diagram of the driving assist device 200. The driving assist device 200 is formed by adding an actual data measurement unit 210, an actual pattern DB 220, and an actual pattern selection unit 230 to the configuration of the driving assist device 100 of the first embodiment.

The actual data measurement unit 210 acquires actual data during the running of the train and outputs the acquired actual data to the actual pattern DB 220. Here, the actual data are information equivalent to running actual information in the first embodiment illustrated in Fig. 4, and is formed of the running pattern information and the identification information. Further, when the actual data measurement unit 210 acquires the actual data, the actual data may be directly measured by a sensor built in the actual data measurement unit 210, or information measured by another device mounted on the rolling stock may be acquired via a network on the rolling stock. Alternatively, the information may be acquired by communicating with a device on the ground. Further, the actual data measurement unit 210 is not required to exist only on the ground or on the rolling stock, but may exist both on the ground and on the rolling stock, thereby respectively acquiring different information.

The actual pattern DB 220 records information on which the actual data is received from the actual data measurement unit 210 as an actual pattern database. Here, the actual pattern DB may exist on the rolling stock or on the ground. Further, DB may exist on the ground and on the rolling stock for each piece of information, and thus, different information may be respectively recorded.

The actual pattern selection unit 230 analyzes the actual data recorded in the actual pattern DB 220 at the point of time when the driving assist device 200 starts generating the driving reference pattern, selects at least one or more pieces of actual pattern information, and transmits the selected actual pattern information to the degree-of-similarity calculation unit 120, the section simulation pattern generation unit 130, and the combination pattern generation unit 140. When the actual pattern selection unit 230 selects the actual pattern, the actual pattern is selected so that a running time among data in the actual pattern DB is within a range which complies with a specified running time, and a value of the objective function calculated by the actual pattern is small.

At this time, the value of the objective function may be calculated for all of the data in the actual pattern DB every time. However, calculated results may be stored in the actual pattern DB, or only an actual pattern in which the value of the objective function is reduced may be stored in the actual pattern DB and the rest of them may be deleted, thereby making it possible to shorten the calculation time in each ease.

According to the embodiment, patterns with which the driver has actually run are accumulated in the actual pattern DB 220, and when an actual pattern capable of improving the objective function in comparison with a conventionally adopted one is recorded, the actual pattern 1c is updated, thereby generating a reference running pattern having a higher effect on targeted energy saving and improvement of the riding comfort. Further, the actual pattern selection unit 230 selects the actual pattern from the actual pattern DB 220, such that the number of the actual patterns used for calculation by the degree-of-similarity calculation unit 120 and the section simulation pattern generation unit 130 is limited, thereby making it possible to prevent an increase in the processing time required for deriving the driving reference pattern even when the actual patterns recorded in the actual pattern DB 220 are increased.

Accordingly, the running pattern outputted by the driving assist device 200 can continuously improve the driving reference pattern to be outputted by reflecting the know-how newly constructed by the driver even in a section to which the simulation pattern is difficult to be applied.

[Third Embodiment]

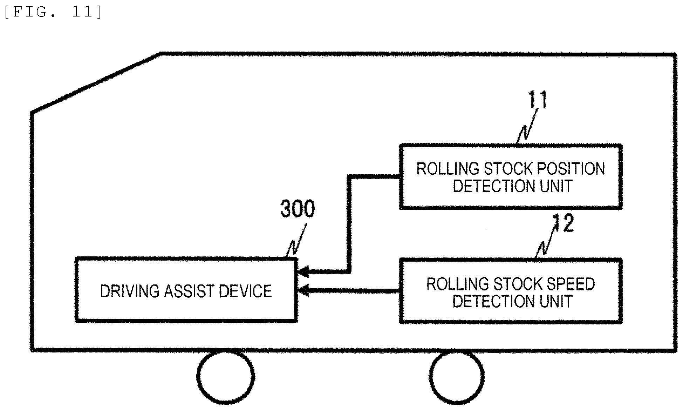

Fig. 11 is a configuration diagram of a rolling stock system which is a third embodiment of the embodiments. Since this embodiment has a configuration which is similar to those of the first and second embodiments described above, the same reference signs are affixed to components in common, and descriptions thereof will be omitted. The rolling stock system includes the rolling stock position detection unit 11 which detects the position of the rolling stock, the rolling stock speed detection unit 12, and a driving assist device 300.

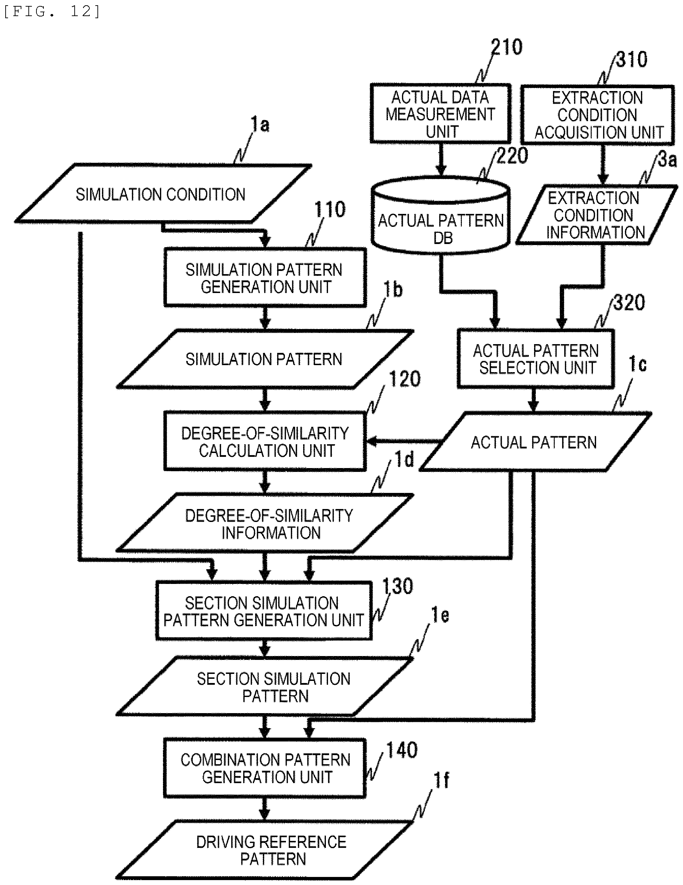

Fig. 12 is a configuration diagram of the driving assist device 300. The driving assist device 300 has a configuration in which an extraction condition acquisition unit 310 is further added to the configuration of the driving assist device 200 of the second embodiment.

The extraction condition acquisition unit 310 acquires extraction condition information 3a used as a condition for extracting data from the actual pattern DB 220, and transmits the acquired extraction condition information 3a to an actual pattern selection unit 320.

Here, the extraction condition is a condition for limiting the actual pattern. The extraction condition may be, for example, a condition of driver information for specifying one or a plurality of the drivers, may be a condition relating to a running pattern in which a deceleration operation is performed at deceleration equal to or greater than a certain speed, or may set as condition an element that determines the objective function such as the electric power consumption and the riding comfort derived from the number of times of the driving operation.

Further, a means for acquiring the information of the extraction condition information 3a by the extraction condition acquisition unit can be configured to, for example, request the driver for an input when determining the driving reference pattern, and to acquire an input content.

However, a means for acquiring the extraction condition information 3a by the extraction condition acquisition unit may be inputted in advance before the driver starts the driving of the train, or may be a configuration in which the extraction condition is recorded on a server on the ground and is read when determining the driving reference pattern. In short, any means may be adopted as long as the condition can be determined at the time of determining the driving reference pattern, and a condition in which a plurality of the above-mentioned conditions are combined with each other may be used.

The actual pattern selection unit 320 extracts actual data used for analysis from the data recorded in the actual pattern DB 220 based upon the extraction condition information 3a received from the extraction condition acquisition unit 310 at the time when the driving assist device 300 starts generating the driving reference pattern, and then performs the same processing as that of the actual pattern selection unit 230, after which at least one or more actual patterns 1c are selected and transmitted to the degree-of-similarity calculation unit 120, the section simulation pattern generation unit 130, and the combination pattern generation unit 140.

According to the embodiment, it is possible for the driver himself or herself or an instructor who instructs the driver, and an operator of a system for performing operation management or an operation management system to designate which pattern to be selected when extracting the actual pattern from the actual pattern database.

Accordingly, for example, when only adopting the actual pattern of the driver himself or herself, the completely same driving method as usual can be maintained in a section where the actual pattern is adopted. Thus, it is possible to provide the driving assist information capable of achieving the targets such as the energy saving and the improvement of the riding comfort without being conscious of a difference in the driving method, except that fine adjustment of the running pattern according to a simulation result in the section having high similarity is performed.

Alternatively, the driver receiving instruction or the instructor sets conditions so that an actual pattern of the instructor as a target of the driving is adopted, thereby providing the driving assist information based upon the actual pattern of the instructor as the target of the driving.

Alternatively, when room for improving the pattern of the driver himself or herself is large, a condition for slightly improving the pattern of the driver himself or herself is designated, thereby making it possible to provide the driving assist information for gradually improving the driving operation without excessively increasing the cognitive load for the improvement. At this time, as a method of providing the condition, another driver as an intermediate target may be directly designated, or the running pattern such as the deceleration or the electric power consumption or a numerical value relating to the objective function may be designated as condition, and alternatively, both the driver and the numerical value condition may be designated.

Further, the present invention is not limited to the embodiments described above, and includes various modifications. For example, the above-mentioned embodiments are described in detail so as to describe the present invention in an easy-to-understand manner, and are not necessarily limited to those including all of the configurations described herein. Further, a part of a configuration of one embodiment can be replaced with a configuration of another embodiment, and additionally, the configuration of one embodiment can be added to the configuration of another embodiment. Further, it is possible to perform addition of other configurations, removal and replacement with respect to a part of a configuration of each embodiment.

Reference Signs List

100:     driving assist device
110:     simulation pattern generation unit
120:     degree-of-similarity calculation unit
130:     section simulation pattern generation unit
140:     combination pattern generation unit
11:      rolling stock position detection unit
12:      rolling stock speed detection unit
1a:      simulation condition
1b:      simulation pattern
1c:      actual pattern
1d:      degree-of-similarity information
1e:      section simulation pattern
1f:      driving reference pattern
200:     driving assist device
210:     actual data measurement unit
220:     actual pattern DB
230:     actual pattern selection unit
300:     driving assist device
310:     extraction condition acquisition unit
320:     actual pattern selection unit
3a:      extraction condition information

**Claims**

1.  A driving assist device that determines a driving reference pattern which is a relationship between a position and a speed as a reference of driving of a train, and proposes assist information on a driving operation of the train to a driver of the train, comprising;
    a simulation pattern generation unit for performing numerical calculation based upon a simulation condition, and generating a simulation pattern which is a relationship between a position and a speed as a target of the driving of the train;
    a degree-of-similarity calculation unit for calculating a degree of similarity between the simulation pattern and an actual pattern based upon the actual pattern generated from a relationship between a position and a speed in actual driving of the train and the simulation pattern, determining a first section having a high degree of similarity and a second section having a low degree of similarity, and outputting the first section and the second section as degree-of-similarity information;
    a section simulation pattern generation unit for generating a section simulation pattern in the first section based upon the actual pattern and the degree-of-similarity information; and
    a combination pattern generation unit for generating the driving reference pattern from the actual pattern, the degree-of-similarity information, and the section simulation pattern, wherein
    the combination pattern generation unit generates a running pattern in which the section simulation pattern is combined in the first section and the actual pattern is combined in the second section, as the driving reference pattern.

2.  The driving assist device according to claim 1, comprising:

    an actual data measurement unit for measuring the actual pattern;
    an actual pattern database for accumulating the actual pattern measured by the actual data measurement unit; and
    an actual pattern selection unit for selecting one or more actual patterns from the actual pattern database, and outputting the selected one or more actual patterns as the actual pattern information, wherein
    the actual pattern selection unit selects the actual pattern based upon an objective function that includes at least one evaluation index with respect to energy-saving performance, driving operability, or riding comfort and outputs a small value when a state is desirable for a passenger or a business operator of a train.

3.  The driving assist device according to claim 2, comprising:

    an extraction condition acquisition unit for acquiring extraction condition information, and outputting the acquired extraction condition information to the actual pattern selection unit, wherein

when the actual pattern selection unit selects the actual pattern information from the actual pattern database, only actual pattern based upon the extraction condition information is an object to be selected.

[FIG. 1]

[FIG. 2]

[FIG. 3]

301

SPEED

CURRENT
POSITION

ARRIVAL
POINT

POSITION

302

| TIME BASED UPON CURRENT TIME [SECOND] | POSITION [m] | SPEED [km/h] | DRIVING MODE |
|---|---|---|---|
| 0 | 0.0 | 0 | POWER RUNNING |
| 0.5 | 0.2 | 1 | POWER RUNNING |
| 1 | 0.6 | 2 | POWER RUNNING |
| 1.5 | 1.0 | 3 | POWER RUNNING |
| ⋮ | ⋮ | ⋮ | ⋮ |
| 180 | 1000 | 80 | CONSTANT SPEED |
| 180.5 | 1022 | 80 | CONSTANT SPEED |

[FIG. 4]

| RECORD DATE AND TIME | 2015/5/1 09:00 | | | |
|---|---|---|---|---|
| DRIVER ID | 000000000000 | | | |
| RUNNING SECTION | ✕✕ LINE ●● STATION ⇒ △△ STATION | | | |
| BOARDING RATE | 100% | | | |
| WEATHER | SUNNY | | | |
| RUNNING PATTERN INFORMATION | TIME BASED UPON CURRENT TIME [SECOND] | POSITION [m] | SPEED [km/h] | DRIVING OPERATION |
| | 0 | 0.0 | 0 | POWER RUNNING |
| | 0.5 | 0.2 | 1 | POWER RUNNING |
| | 1 | 0.6 | 2 | POWER RUNNING |
| | 1.5 | 1.0 | 3 | POWER RUNNING |
| | ⋮ | ⋮ | ⋮ | ⋮ |
| | 180 | 1000 | 80 | CONSTANT SPEED |
| | 180.5 | 1022 | 80 | CONSTANT SPEED |

[FIG. 5]

```
                    ┌─────────────────────┐
                    │        START        │
                    └─────────────────────┘
                              │
                    ╱─────────────────────╲◄──────────────────┐
                   ╱    LOOP ABOUT POSITION ╲                  │
                  └───────────────────────────┘               │
                              │                                │
                  ┌───────────────────────────┐                │
                  │  ACQUIRE DRIVING OPERATION │   ～ S501      │
                  │  INFORMATION OF SIMULATION │                │
                  │ PATTERN IN CURRENT POSITION│                │
                  └───────────────────────────┘                │
                              │                                │
                  ╱───────────────────────────╲◄──────────┐    │
                 ╱      LOOP ABOUT NUMBER       ╲          │    │
                 │     OF ACTUAL PATTERNS        │         │    │
                 └─────────────────────────────────┘       │    │
                              │                            │    │
                  ┌───────────────────────────┐   ～ S502  │    │
                  │   ACQUIRE ACTUAL PATTERN   │           │    │
                  └───────────────────────────┘           │    │
                              │                            │    │
                  ┌───────────────────────────┐   ～ S503  │    │
                  │  ACQUIRE DRIVING OPERATION │           │    │
                  │     INFORMATION OF ACTUAL  │           │    │
                  │ PATTERN IN CURRENT POSITION│           │    │
                  └───────────────────────────┘           │    │
                              │              ～ S504        │    │
                  ┌───────────────────────────┐           │    │
                  │   PERFORM COINCIDENCE      │           │    │
                  │  DETERMINATION OF DRIVING  │           │    │
                  │        OPERATION           │           │    │
                  └───────────────────────────┘           │    │
                              │                            │    │
                  ╲───────────────────────────╱───────────┘    │
                   ╲     LOOP ABOUT NUMBER    ╱                 │
                    ╲   OF ACTUAL PATTERNS   ╱                  │
                     └─────────────────────┘                   │
                              │         ～ S505                 │
                         ╱─────────────╲                        │
                        ╱  COINCIDENCE  ╲      No                │
                       ╱  DETERMINATION  ╲───────────┐          │
                       ╲ IN DATA EQUAL TO ╱          │          │
                        ╲OR GREATER THAN ╱           │          │
                         ╲REFERENCE RATIO?           │          │
                          ╲───────────╱              │          │
                      Yes     │                      │          │
                  ～ S506      │            S507 ～    │          │
                  ┌──────────────────┐  ┌──────────────────┐    │
                  │SECTION INFORMATION│  │SECTION INFORMATION│   │
                  │ OF CURRENT POSITION│ │ OF CURRENT POSITION│  │
                  │  =FIRST SECTION   │  │  =SECOND SECTION  │    │
                  └──────────────────┘  └──────────────────┘    │
                              │◄────────────────────┘           │
                  ╲───────────────────────────╱─────────────────┘
                   ╲     LOOP ABOUT POSITION  ╱
                    └─────────────────────┘
                              │
                    ┌─────────────────────┐
                    │         END         │
                    └─────────────────────┘
```

[FIG. 6]

| | P611 | P612 | COINCIDENCE DETERMINATION RESULT |
|---|---|---|---|
| S620 | 5 NOTCHES OF POWER RUNNING | 5 NOTCHES OF POWER RUNNING | COINCIDENCE |
| S621 | CONSTANT SPEED | 5 NOTCHES OF POWER RUNNING | COINCIDENCE |
| S622 | CONSTANT SPEED | CONSTANT SPEED | COINCIDENCE |
| S623 | COASTING | CONSTANT SPEED | COINCIDENCE |
| S624 | COASTING | COASTING | COINCIDENCE |
| S625 | COASTING | 5 NOTCHES OF BRAKING | NONCOINCIDENCE |
| S626 | 4 NOTCHES OF BRAKING | 5 NOTCHES OF BRAKING | NONCOINCIDENCE |
| S627 | 4 NOTCHES OF BRAKING | 3 NOTCHES OF BRAKING | NONCOINCIDENCE |

[FIG. 7]

```
                           ┌─────────────┐
                           │    START    │
                           └──────┬──────┘
                                  │
                                  ▼                       S701
              ┌──────────────────────────────────────┐
              │  CALCULATE COMBINATION OF ACTUAL      │
              │  PATTERN FOR EACH SECOND SECTION      │
              └──────────────────┬───────────────────┘
                                 │                  ◄──────────┐
                                 ▼                             │
          ╱────────────────────────────────────────────╲      │
         ╱          LOOP ABOUT ACTUAL COMBINATION        ╲     │
        ╱────────────────────────────────────────────────╲    │
                                 │                             │
                                 ▼                    S702     │
              ┌──────────────────────────────────────┐        │
              │      SET CONSTRAINT CONDITION L       │        │
              │   FROM CURRENT ACTUAL COMBINATION     │        │
              └──────────────────┬───────────────────┘        │
                                 │                    S703     │
                                 ▼                             │
              ┌──────────────────────────────────────┐        │
              │      OPTIMIZE OBJECTIVE FUNCTION      │        │
              │    UNDER CONSTRAINT CONDITION L       │        │
              └──────────────────┬───────────────────┘        │
                                 │                    S704     │
                                 ▼                             │
              ┌──────────────────────────────────────┐        │
              │   ADD CURRENT ACTUAL COMBINATION      │        │
              │  AND OPTIMIZED SIMULATION PATTERN     │        │
              │   TO SECTION SIMULATION PATTERN       │        │
              └──────────────────┬───────────────────┘        │
                                 │                             │
                                 ▼                             │
        ╲────────────────────────────────────────────────╱    │
         ╲         LOOP ABOUT ACTUAL COMBINATION         ╱─────┘
          ╲────────────────────────────────────────────╱
                                 │
                                 ▼
                           ┌─────────────┐
                           │     END     │
                           └─────────────┘
```

[FIG. 8]

810

SIMULATION PATTERN

P811

820

ACTUAL PATTERN

P821

830

S831

S833

HIGH DEGREE OF SIMILARITY
: FIRST SECTION
⇒APPLY SIMULATION PATTERN
(PERFORM SIMULATION AGAIN)

P711

P821

LOW DEGREE OF SIMILARITY
: SECOND SECTION
⇒APPLY ACTUAL PATTERN

S832

S834

840

P841

P843

P842

P844

[FIG. 9]

[FIG. 10]

[FIG. 11]

EP 3 511 196 A1

[FIG. 12]

# EP 3 511 196 A1

<table>
<tr><td colspan="2" align="center">INTERNATIONAL SEARCH REPORT</td><td colspan="2">International application No.<br><br>PCT/JP2017/025630</td></tr>
</table>

A. CLASSIFICATION OF SUBJECT MATTER
*B60L15/40(2006.01)i, B61L25/04(2006.01)i*

According to International Patent Classification (IPC) or to both national classification and IPC

B. FIELDS SEARCHED

Minimum documentation searched (classification system followed by classification symbols)
B60L15/40, B61L25/04

Documentation searched other than minimum documentation to the extent that such documents are included in the fields searched
Jitsuyo Shinan Koho          1922–1996   Jitsuyo Shinan Toroku Koho   1996–2017
Kokai Jitsuyo Shinan Koho   1971–2017   Toroku Jitsuyo Shinan Koho   1994–2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2015-182684 A (Hitachi, Ltd.), 22 October 2015 (22.10.2015), entire text; all drawings (Family: none) | 1-3 |
| A | JP 2009-31655 A (Mitsubishi Electric Corp.), 12 February 2009 (12.02.2009), entire text; all drawings (Family: none) | 1-3 |

☐ Further documents are listed in the continuation of Box C.     ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 19 September 2017 (19.09.17) | 10 October 2017 (10.10.17) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (January 2015)

24

**EP 3 511 196 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015137035 A